# EUROPÄISCHE PATENTANMELDUNG

(11) **EP 4 840 821 A1**
(43) Veröffentlichungstag der Anmeldung: **18.11.2026**
(21) Anmeldenummer: 25175936.1
(22) Anmeldetag: 13.05.2025
(51) Int. Cl.: C01B 3/52, C25B 1/04

(54) **VERFAHREN UND ANLAGE ZUM SPEISEN EINES WASSERSTOFFHALTIGEN HOCHDRUCK-GASSTROMS IN EINE PIPELINE**

(71) Anmelder: GasConTec GmbH, 61348 Bad Homburg v. d. Höhe (DE)
(72) Erfinder: Balthasar, Wolff, Dr., 40833 Ratingen (DE); Rappold, Dorit, 60437 Frankfurt (DE); Wagner, Ulrich, Dr., 06406 Bernburg, OT Biendorf (DE)
(74) Vertreter: Patentanwälte Bauer Vorberg Kayser

(57) **Zusammenfassung**

Die Erfindung betrifft Verfahren zum Speisen eines wasserstoffhaltigen Hochdruck-Gasstroms (1) in eine Pipeline (2), wobei ein Niederdruck-Gemisch-Gasstrom (30) enthaltend mindestens 50% Wasserstoff und Kohlenstoffdioxid einer Kompressoranordnung (8) zur Druckerhöhung und zum Gewinnen eines Hochdruck-Gemisch-Gasstroms (9) zugeführt wird und wobei der Hochdruck-Gemisch-Gasstrom (9) einer Kohlenstoffdioxidwäsche (10) 1. zum Auswaschen mindestens eines Teiles des Kohlenstoffdioxids als Auswaschstrom (40) aus dem Hochdruck-Gemisch-Gasstrom (9) und zum Erhalten des wasserstoffhaltigen Hochruck-Gasstroms (1) zugeführt wird, wobei zumindest ein Teil des Auswaschstroms (40) prozesstechnisch der Kompressoranordnung (8) vorgelagert dem Niederdruck-Gemisch-Gasstrom (30) zugeführt wird und wobei der wasserstoffhaltige Hochdruck-Gasstrom (1) in die Pipeline (2) gespeist wird. Ebenso betrifft die Erfindung eine entsprechende Anlage zum Speisen eines wasserstoffhaltigen Gasstroms (1) in eine Pipeline (2).

## Beschreibung

Die Erfindung betrifft ein Verfahren zum Speisen eines wasserstoffhaltigen Hochdruck-Gasstroms in eine Pipeline sowie eine Anlage zum Speisen eines wasserstoffhaltigen Hochdruck-Gasstroms in eine Pipeline.

Wasserstoff kann nicht nur als Ausgangsstoff für die Herstellung von Energieträgern wie Ammoniak verwendet werden, sondern stellt auch selbst einen Energieträger dar, welcher nicht nur direkt und ohne Emission von CO2 verbrannt werden kann, sondern beispielsweise auch für Brennstoffzellen eingesetzt werden kann.

Eine Schwierigkeit bei der Bereitstellung von Wasserstoff in großen Mengen besteht darin, dass das Gewinnen von Wasserstoff regelmäßig an denjenigen Orten, an denen er eingesetzt werden soll, nicht oder nur unter ungünstigen Bedingungen zu gewinnen ist. So erfordert beispielsweise die Elektrolyse große Mengen an elektrischem Strom, welcher vorzugsweise ohne Emission von CO2 erzeugt werden soll. Da auch die Übertragung von großen Mengen an elektrischer Energie über weite Strecken problematisch ist, wird also vorzugsweise die Elektrolyse dort vorgenommen, wo die emissionsfrei gewonnene Energie zur Verfügung steht - bspw. in der Nähe von großen Wasserkraftwerken - und nicht dort, wo der Wasserstoff gebraucht wird. Derartige große Wasserkraftwerke befinden sich aber regelmäßig nicht in der Nähe von industriellen Zentren.

Neben der Elektrolyse können größere Mengen an Wasserstoff auch aus Synthesegas gewonnen werden, welches wiederum aus Erdgas hergestellt wurde. Auch dieser Vorgang wird vorzugsweise nahe an der Erdgasquelle durchgeführt. Um bei diesem Ansatz einen CO2-Fußabdruck zu erreichen, welcher zur Elektrolyse vergleichbar niedriger oder sogar noch niedriger ist, sind weitergehende Maßnahmen erforderlich wie etwa eine Abtrennung des CO2 vor dem Abtransport sowie eine Einlagerung des CO2, welche vorzugsweise an der Lagerstätte des Erdgases erfolgt. Für beide Gewinnungsarten von Wasserstoff besteht also das Problem, den gewonnenen Wasserstoff auch über eine größere Entfernung dahin transportieren zu können, wo er gebraucht wird. Ein besonders attraktiver Ansatz zum Transport des Wasserstoffs insbesondere über große Entfernungen besteht darin, diesen in eine Pipeline einzuspeisen.

Allerdings muss hierzu der Wasserstoff auf einen hohen Druck gebracht werden. Dies ist bei hochreinem Wasserstoff wegen des geringen Molekulargewichts und der niedrigen Dichte problematisch. Das geringe Molekulargewicht und die niedrige Dichte bewirken, dass allein für eine Druckerhöhung auf beispielsweise 100 bar etwa 10 % des Wärmeinhalts des Wasserstoffstroms für die Druckerhöhung selbst verbraucht werden muss. Weiter können für die Druckerhöhung keine Turbokompressoren verwendet werden, sondern es sind vielmehr eine größere Anzahl von Kolbenkompressoren erforderlich, welche durch ihre Anzahl und ihren komplexeren Aufbau mit höheren Kosten verbunden sind.

Ausgehend vom Stand der Technik besteht daher die Aufgabe der Erfindung darin, eine Lösung bereitzustellen, bei der Wasserstoff so gewonnen werden kann, dass er auch ohne den Einsatz von Kolbenkompressoren in eine Pipeline eingespeist werden kann.

Bezogen auf ein Verfahren zum Speisen eines wasserstoffhaltigen Hochdruck-Gasstroms in eine Pipeline wird diese Aufgabe durch die Merkmale des Patentanspruch 1 gelöst. Bezogen auf eine Anlage zum Speisen eines wasserstoffhaltigen Hochdruck-Gasstroms in eine Pipeline wird diese Aufgabe durch die Merkmale des Patentanspruchs 15 gelöst.

Der Erfindung liegt die Erkenntnis zugrunde, dass eine Druckerhöhung eines wasserstoffhaltigen Niederdruck-Gasstroms mit einem hohen Wasserstoffgehalt von mindestens 50%, insbesondere mit Turbokompressoren, dann möglich ist, wenn ein Niederdruck-Gemisch-Gasstrom gewonnen wird, der den wasserstoffhaltigen Niederdruck-Gasstrom sowie Kohlenstoffdioxid aufweist. Der Niederdruck-Gemisch-Gasstrom weist in ausreichender Menge weitere Bestandteile neben Wasserstoff auf, was gegenüber reinem Wasserstoff die Dichte und das mittlere Molekulargewicht erhöht. Es erfolgt dann eine Druckerhöhung des Niederdruck-Gemisch-Gasstromes zur Gewinnung eines Hochdruck-Gemisch-Gasstromes. Prozesstechnisch nachgelagert ist dann eine Kohlenstoffdioxidwäsche, um einen möglichst reinen wasserstoffhaltigen Hochdruck-Gasstrom zu gewinnen, welcher in die Pipeline eingespeist wird. Zudem wird aus der Kohlenstoffdioxidwäsche ein Auswaschstrom gewonnen, enthaltend mindestens einen Teil des Kohlenstoffdioxids aus dem Hochdruck-Gemisch-Gasstrom, wobei zumindest ein Teil des Auswaschstromes prozesstechnisch der Kompressoranordnung vorgelagert dem Niederdruck-Gemisch-Gasstrom zugeführt wird.

Dadurch wird nicht nur der Einsatz von Turbokompressoren möglich, sondern es verringert sich unabhängig von der Bauart der Kompressoren darüber hinaus auch aus physikalischen Gründen der Energieaufwand bei der Komprimierung in erheblichem Maße. So ist etwa für die Komprimierung von Methan nur ein Fünftel der Energie gegenüber der Komprimierung von hochreinem Wasserstoff erforderlich. Die sich prozesstechnisch anschließende Kohlenstoffdioxidwäsche kann auch auf diesem erhöhten Druck durchgeführt werden und geht mit einem lediglich geringfügigen Druckverlust einher, sodass der aus der Kohlenstoffdioxidwäsche erhaltene Hochdruck-Gasstrom einen für die Einspeisung in die Pipeline ausreichend hohen Druck aufweist. Durch die Kreislaufahrweise des Kohlenstoffdioxids, wobei zumindest ein Teil des aus dem Hochdruck-Gemisch-Gasstrom gewonnenen kohlenstoffdioxidhaltigen Auswaschstroms prozesstechnisch zurück vor die Kompressoranordnung geführt wird, wird zudem eine Emission von Kohlenstoffdioxid weitestgehend vermieden.

Das bevorzugte Ausführungsbeispiel des Unteranspruchs 2 betrifft die Gewinnung des Niederdruck-Gemisch-Gasstromes, wobei zumindest ein Teil durch einen Niederdruck-Wasserstoffstrom durch Elektrolyse gewonnen wird. Insbesondere beträgt der Druck des Niederdruck-Wasserstoffstromes nach der Elektrolyse und/oder des Niederdruck-Gemisch-Gasstroms zwischen 6 bar und 30 bar.

Gemäß dem bevorzugten Ausführungsbeispiel des Unteranspruchs 3, wird zumindest ein Teil des Niederdruck-Gemisch-Gasstroms durch einen Niederdruck-Kohlenstoffdioxidstrom gewonnen. Dieser kann z.B. aus einer Wasserstoffanlage, einer Ammoniakanlage oder einer Rauchgaswäsche gewonnen werden. Der Niederdruck-Kohlenstoffdioxidgasstrom kann einen Druck von 40 bar aufweisen.

Insbesondere wird der Niederdruck-Gemisch-Gasstrom zumindest teilweise aus einer Zusammenführung des Niederdruck-Wasserstoffstromes und des Niederdruck-Kohlenstoffdioxidstromes gewonnen. Der Niederdruck-Gemisch-Gasstrom kann auch vollständig aus dem Niederdruck-Wasserstoffstrom und dem Niederdruck-Kohlenstoffdioxidstrom gewonnen werden.

Das bevorzugte Ausführungsbeispiel des Unteranspruchs 4 betrifft eine zusätzliche oder alternative Gewinnung des Niederdruck-Gemisch-Gasstromes, wobei der Niederdruck-Gemisch-Gasstrom zumindest teilweise aus einer Synthesegasreaktoranordnung gewonnen wird. Der Niederdruck-Gemisch-Gasstrom kann auch vollständig aus einem Synthesegasstrom der Synthesegasreaktoranordnung gewonnen werden.

Das bevorzugte Ausführungsbeispiel des Unteranspruchs 5 betrifft die Zusammensetzung des Niederdruck-Gemisch-Gasstroms und/oder des Hochdruck-Gemisch-Gasstroms, wobei der Niederdruck-Gemisch-Gasstrom und/oder der Hochdruck-Gemisch-Gasstrom einen Kohlenstoffdioxidanteil im Bereich zwischen 20 Vol% und 40 Vol% aufweist und insbesondere einen Kohlenstoffdioxidanteil von 30 Vol% aufweist. Durch das durch den Kohlenstoffdioxidanteil erhöhte molekulare Gewicht des Niederdruck-Wasserstoffstromes kann eine effiziente Druckerhöhung erfolgen.

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem ersten Ausführungsbeispiel,
- Fig. 2: schematisch das Fließbild einer vorschlagsgemäßen Anlage zur Ausführung des vorschlagsgemäßen Verfahrens gemäß einem zweiten Ausführungsbeispiel,
- Fig. 3: schematisch das Fließbild einer vorschlagsgemäßen Anlage zur Ausführung des vorschlagsgemäßen Verfahrens gemäß einem dritten Ausführungsbeispiel,
- Fig. 4: schematisch das Fließbild einer vorschlagsgemäßen Anlage zur Ausführung des vorschlagsgemäßen Verfahrens gemäß einem vierten Ausführungsbeispiel und
- Fig. 5: schematisch das Fließbild einer vorschlagsgemäßen Anlage zur Ausführung des vorschlagsgemäßen Verfahrens gemäß einem fünften Ausführungsbeispiel.

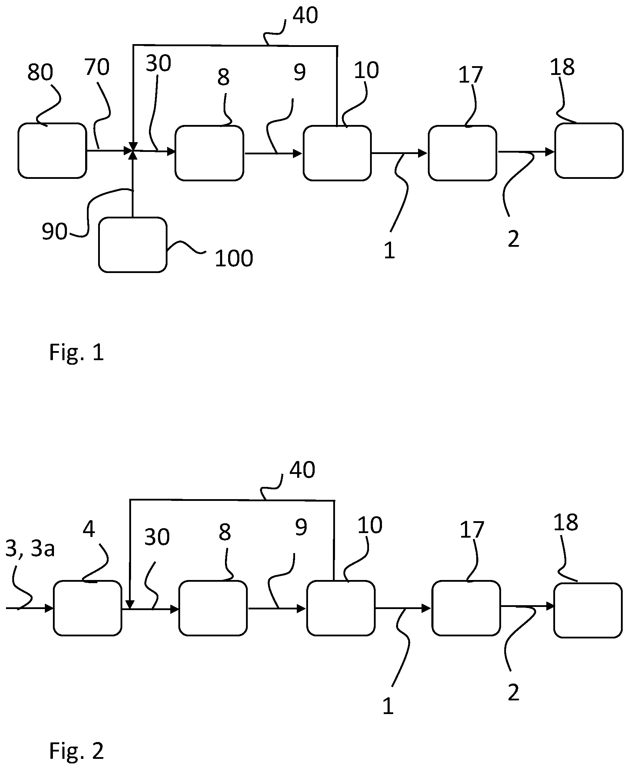

Das vorschlagsgemäße Verfahren, welches zunächst anhand des Ausführungsbeispiels der Fig. 1 beschrieben wird, dient zum Speisen eines wasserstoffhaltigen Hochdruck-Gasstroms 1 in eine Pipeline 2. Mit dem Speisen des wasserstoffhaltigen Hochdruck-Gasstroms 1 in die Pipeline 2 ist das Einbringen des wasserstoffhaltigen Hochdruck-Gasstroms 1 in die Pipeline 2 zwecks Transport gemeint.

Es wird zunächst ein Niederdruck-Gemisch-Gasstrom 30 gewonnen, durch Zusammenführung eines Niederdruck-Wasserstoffstromes 70, welcher aus einem Elektrolyseur 80 gewonnen wird, und eines Niederdruck-Kohlenstoffdioxidstromes 90 aus einer CO2-Quelle 100. Eine CO2-Quelle 100 kann dabei sein: eine Wasserstoffanlage, eine Ammoniakanlage oder einer Rauchgaswäsche.

Es wird der Niederdruck-Gemisch-Gasstrom 30 enthaltend Wasserstoff und Kohlenstoffdioxid einer Kompressoranordnung 8 zur Druckerhöhung zugeführt. Es ist bevorzugt, dass die Kompressoranordnung 8 mindestens einen Turbokompressor umfasst oder aus mindestens einem Turbokompressor besteht. Alternativ oder zusätzlich sein, dass die Kompressoranordnung 8 mindestens einen Zentrifugal-, Axial-, Kolben- oder kombinierten Kolben-und-Axial-Kompressor umfasst oder aus mindestens einem solchen Kompressor besteht.

Aus der Kompressoranordnung 8 wird ein Hochdruck-Gemisch-Gasstrom 9 gewonnen. Vorzugsweise entspricht der Hochdruck-Gemisch-Gasstrom 9 in seiner Zusammensetzung im Wesentlichen dem Niedrigdruck-Gemisch-Gasstrom 30, weist aber einen höheren Druck auf.

Vorschlagsgemäß wird der Hochdruck-Gemisch-Gasstrom 9 einer Kohlenstoffdioxidwäsche 10 zum Auswaschen mindestens eines Teiles des Kohlenstoffdioxids als Auswaschstrom 40 aus dem Hochdruck-Gemisch-Gasstrom 9 und zum Erhalten des wasserstoffhaltigen Hochdruck-Gasstroms 1 zugeführt.

Der aus der Kohlendioxidwäsche 10 gewonnene Auswaschstrom 40 wird dann zumindest teilweise prozesstechnisch der Kompressoranordnung 8 vorgelagert dem Niederdruck-Gemisch-Gasstrom 30 zugeführt. Insofern wird zumindest ein Teil des Kohlenstoffdioxids im Kreis geführt. Der Auswaschstrom 40 kann der Kompressoranordnung 8 unmittelbar vorgelagert zugeführt werden. Der Niederdruck-Gemisch-Gasstrom 30 umfasst dann den Niederdruck-Wasserstoffstrom 70, den Niederdruck-Kohlenstoffdioxidstrom 90 und den Auswaschstrom 40.

Schließlich wird der wasserstoffhaltige Hochdruck-Gasstrom 1 in die Pipeline 2 gespeist.

Die vorschlagsgemäße Anlage dient dem Speisen des wasserstoffhaltigen Gasstroms 1 in die Pipeline 2.

Die vorschlagsgemäße Anlage umfasst einen Elektrolyseur 80 zur Gewinnung eines Niederdruck-Wasserstoffstromes 70 und eine CO2-Gewinnungsanlage 100 zur Gewinnung eines Niederdruck-Kohlenstoffdioxidstromes 90.

Ebenso umfasst die vorschlagsgemäße Anlage die Kompressoranordnung 8 zur Druckerhöhung, welcher Kompressoranordnung 8 zum Gewinnen des Hochdruck-Gemisch-Gasstromes 9 der Niederdruck-Gemisch-Gasstrom 30 zugeführt wird und die Kohlenstoffdioxidwäsche 10, welcher zum Erhalten des wasserstoffhaltigen Hochdruck-Gasstroms 1 und des Auswaschstroms 40 der Hochdruck-Gemisch-Gasstrom zugeführt wird 9, wobei in der Kohlenstoffdioxidwäsche 10 mindestens ein Teil des Kohlenstoffdioxids aus dem Hochdruck-Gemisch-Gasstrom 9 ausgewaschen wird.

Schließlich umfasst die vorschlagsgemäße Anlage einen Pipelineanschluss 17, welcher der wasserstoffhaltige Hochdruck-Gasstrom 1 zum Speisen in die Pipeline 2 zugeführt wird.

Eine bevorzugte Ausführungsform des vorschlagsgemäßen Verfahrens und der vorschlagsgemäßen Anlage ist dadurch gekennzeichnet, dass der Niederdruck-Gemisch-Gasstrom 30 einen Kohlenstoffdioxidanteil von mindestens 20 Vol% und maximal 40 Vol% aufweist. Bevorzugt weist der Hochdruck-Gemisch-Gasstrom 9 ebenfalls einen Kohlenstoffdioxidanteil von mindestens 20 Vol% und maximal 40 Vol% auf. Insbesondere weisen der Niederdruck-Gemisch-Gasstrom 30 und der Hochdruck-Gemisch-Gasstrom 9 im Wesentlichen die gleiche Zusammensetzung auf.

Eine bevorzugte Ausführungsform des vorschlagsgemäßen Verfahrens und der vorschlagsgemäßen Anlage ist dadurch gekennzeichnet, dass der wasserstoffhaltige Hochdruck-Gasstrom 1 nach Erhalten aus der Kohlenstoffdioxidwäsche 10 druckerhöhungsfrei in die Pipeline 2 gespeist wird. Anders ausgedrückt findet keine Druckerhöhung prozesstechnisch zwischen der Kohlenstoffdioxidwäsche 10 und dem Einspeisen in die Pipeline 2 statt. Insbesondere findet keine Druckerhöhung prozesstechnisch nach der Kompressoranordnung 8 statt. Vorzugsweise findet prozesstechnisch zwischen der Kompressoranordnung 8 und dem Einspeisen in die Pipeline 2 nur ein Absinken des Drucks statt. Damit wird das Vorsehen einer weiteren Kompressorstufe und insbesondere das Vorsehen von Kolbenkompressoren eingespart.

Eine weitere bevorzugte Ausführungsform des vorschlagsgemäßen Verfahrens und der vorschlagsgemäßen Anlage ist dadurch gekennzeichnet, dass die Kompressoranordnung 8 den Druck so erhöht, dass der Hochdruck-Gemisch-Gasstrom 9 einen Druck von mindestens 80 bar aufweist. Vorzugsweise weist der Hochdruck-Gemisch-Gasstrom 9 einen Druck von mindestens 100 bar und insbesondere von mindestens 120 bar auf, weiter vorzugsweise weist der Hochdruck-Gemisch-Gasstrom 9 einen Druck von mindestens 200 bar auf. Es ist weiter bevorzugt, dass ein Druckverlust des wasserstoffhaltigen Hochdruck-Gasstroms 1 gegenüber dem Hochdruck-Gemisch-Gasstrom 9 weniger als 10 bar und vorzugsweise weniger als 5 bar beträgt. Auf diese ist der Druck des wasserstoffhaltigen Hochdruck-Gasstroms 1 hoch genug, um ohne weitere Druckerhöhung in die Pipeline 2 gespeist werden zu können.

Grundsätzlich kann der wasserstoffhaltige Hochdruck-Gasstrom 1 einen beliebigen molaren Anteil an Wasserstoff sowie an anderen Stoffen wie insbesondere Kohlenstoffmonoxid, Kohlenstoffdioxid oder Methan aufweisen. Gemäß einer bevorzugten Ausführungsform des vorschlagsgemäßen Verfahrens und der vorschlagsgemäßen Anlage ist vorgesehen, dass der wasserstoffhaltige Hochdruck-Gasstrom 1 einen molaren Anteil an Methan von weniger als 2 % und insbesondere von weniger als 1 % aufweist. Hier kann es auch sein, dass der wasserstoffhaltige Hochdruck-Gasstrom 1 einen molaren Anteil an Kohlenstoffmonoxid von weniger als 1 % und weiter insbesondere von weniger als 0,5 % aufweist.

Gemäß einer weiteren bevorzugten Ausführungsform des vorschlagsgemäßen Verfahrens und der vorschlagsgemäßen Anlage ist vorgesehen, dass der wasserstoffhaltige Hochdruck-Gasstrom 1 einen molaren Anteil an Kohlenstoffdioxid von weniger als 1 % und insbesondere von weniger als 1 Promille aufweist.

Bevorzugt ist, dass der wasserstoffhaltige Hochdruck-Gasstrom 1 einen molaren Anteil an Stickstoff von weniger als 0,5 % aufweist. Ebenso ist es bevorzugt, dass der wasserstoffhaltige Hochdruck-Gasstrom 1 einen molaren Anteil an Argon von weniger als 0,2 % aufweist.

Eine bevorzugte Ausführungsform des vorschlagsgemäßen Verfahrens und der vorschlagsgemäßen Anlage ist dadurch gekennzeichnet, dass der wasserstoffhaltige Hochdruck-Gasstrom 1 einen molaren Anteil an Wasserstoff von mindestens 98 % und vorzugsweise von mindestens 99 % aufweist.

Durch einen solchen hohen molaren Anteil an Wasserstoff und/oder einen solchen niedrigen molaren Anteil an Kohlenstoffmonoxid, Kohlenstoffdioxid oder Methan im wasserstoffhaltigen Hochdruck-Gasstrom 1 kann die Notwendigkeit entfallen, die Reinheit des wasserstoffhaltigen Hochdruck-Gasstroms 1 etwa durch eine Druckwechsel-Adsorptionsvorrichtung - auch bezeichnet als Pressure Swing Adsorption oder PSA - zu erhöhen.

Daher ist eine weitere bevorzugte Ausführungsform des vorschlagsgemäßen Verfahrens und der vorschlagsgemäßen Anlage dadurch gekennzeichnet, dass der wasserstoffhaltige Hochdruck-Gasstrom 1 im Wesentlichen mit der Zusammensetzung in die Pipeline 2 gespeist wird, mit welcher er aus der Kohlenstoffdioxidwäsche 10 erhalten wurde. Folglich findet dann keine weitere Reinigung des wasserstoffhaltigen Hochdruck-Gasstroms 1 prozesstechnisch zwischen der Kohlenstoffdioxidwäsche 10 und dem Einspeisen in die Pipeline 2 statt. Regelmäßig ist der auf diese Weise erreichte Reinheitsgrad an Wasserstoff für die Einspeisung in die Pipeline 2 ausreichend.

Ebenso wird kein Gasstrom mit einer abweichenden Zusammensetzung dem wasserstoffhaltigen Hochdruck-Gasstrom 1 prozesstechnisch zwischen der Kohlenstoffdioxidwäsche 10 und dem Einspeisen in die Pipeline 2 zugeführt.

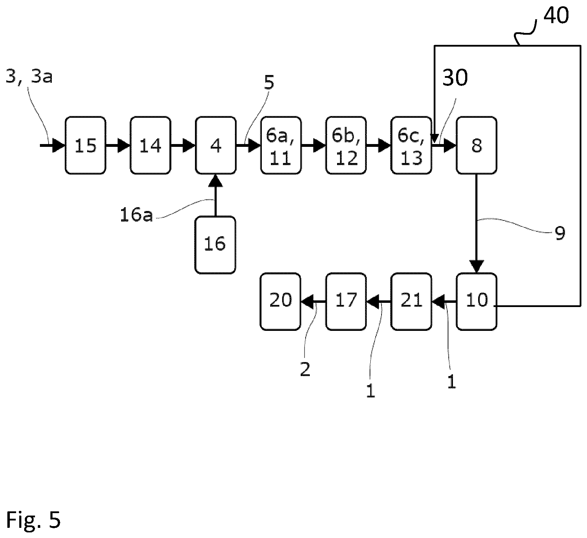

Es kann aber ebenso sein, dass der wasserstoffhaltige Hochdruck-Gasstrom 1 prozesstechnisch zwischen der Kohlenstoffdioxidwäsche 10 und dem Speisen in die Pipeline 2 einer Hochdruck-Druckwechsel-Adsorptionsvorrichtung 21 zur Erhöhung eines Reinheitsgrads an Wasserstoff zugeführt wird. Dies entspricht dem Ausführungsbeispiel der Fig. 5. Vorzugsweise umfasst die vorschlagsgemäße Anlage in diesem Fall die Hochdruck-Druckwechsel-Adsorptionsvorrichtung 21.

Beim ersten Ausführungsbeispiel der Fig. 1 wird der wasserstoffhaltige Hochdruck-Gasstrom 1 am entfernten Ende der Pipeline 2 ohne weitere Behandlung für eine Ammoniaksynthese 18 verwendet. Alternativ kann der wasserstoffhaltige Hochdruck-Gasstrom 1 auch für die Erzeugung von Strom mit einem geringen CO2-Fußabdruck oder aber für eine chemische Synthese verwendet werden, welche keine sehr hohe Reinheit des Wasserstoffstroms erfordert.

Grundsätzlich kann das Kohlenstoffdioxid in der Kohlenstoffdioxidwäsche 10 durch einen beliebigen Ansatz ausgewaschen werden. Vorzugsweise handelt es sich bei der Kohlenstoffdioxidwäsche 10 um eine physikalische Wäsche. Es kann aber auch sein, dass es sich bei der Kohlenstoffdioxidwäsche 10 um eine chemische Wäsche handelt. Gemäß einer bevorzugten Ausführungsform des vorschlagsgemäßen Verfahrens und der vorschlagsgemäßen Anlage ist es vorgesehen, dass in der Kohlenstoffdioxidwäsche 10 das Kohlenstoffdioxid durch ein Methanol umfassendes Waschmedium ausgewaschen wird.

Im Folgenden wird in Verbindung mit Figur 2 ein weiteres Ausführungsbeispiel erläutert. Soweit nicht speziell angegeben, ist das jeweilige Ausführungsbeispiel der Fig. 2 bis Fig. 5 identisch zu demjenigen der Fig. 1. Die jeweiligen Unterschiede werden ausdrücklich benannt.

In Fig. 2 ist ein zweites Ausführungsbeispiel gezeigt, wobei hier der Niederdruck-Gemisch-Gasstrom 30 aus einer Synthesegasreaktoranordnung 4 gewonnen wird, indem ein kohlenstoffhaltiger Energieträgerstrom 3 der Synthesegasreaktoranordnung 4 zum Gewinnen eines Niederdruck-Gemisch-Gasstroms 30 mit Wasserstoff und Kohlenstoffdioxid zugeführt wird. Zusätzlich wird dem Niederdruck-Gemisch-Gasstrom 30 noch zumindest ein Teil des aus der Kohlenstoffdioxidwäsche gewonnenen Auswaschstroms 40 zugeführt.

Grundsätzlich kann es sich bei dem kohlenstoffhaltigen Energieträgerstrom 3 um einen beliebigen solchen Energieträgerstrom handeln. Vorzugsweise handelt es sich bei dem kohlenstoffhaltigen Energieträgerstrom 3 um einen Erdgasstrom 3a, welcher Erdgas umfasst oder im Wesentlichen aus Erdgas besteht.

Grundsätzlich kann der Niederdruck-Gemisch-Gasstrom 30 durch ein beliebiges Verfahren in der Synthesegasreaktoranordnung 4 aus dem Energieträgerstrom 3 gewonnen werden. Gemäß einer bevorzugten Ausführungsform des vorschlagsgemäßen Verfahrens und der vorschlagsgemäßen Anlage ist vorgesehen, dass die Synthesegasreaktoranordnung 4 aus dem Energieträgerstrom 3 den Niederdruck-Gemisch-Gasstrom durch eine autotherme Reformierung gewinnt. Bei der autothermen Reformierung stellt eine insbesondere katalytische partielle Oxidation die für die endothermen Reformierungsreaktionen erforderliche Wärme bereit. Weiter kann bei einer autothermen Reformierung kann Synthesegas mit einem höheren Druck als etwa bei einem Steam-Reforming gewonnen werden, sodass die für die Kompressoranordnung 8 benötigte Leistung geringer ist. Damit sind auch die entsprechenden Kosten niedriger.

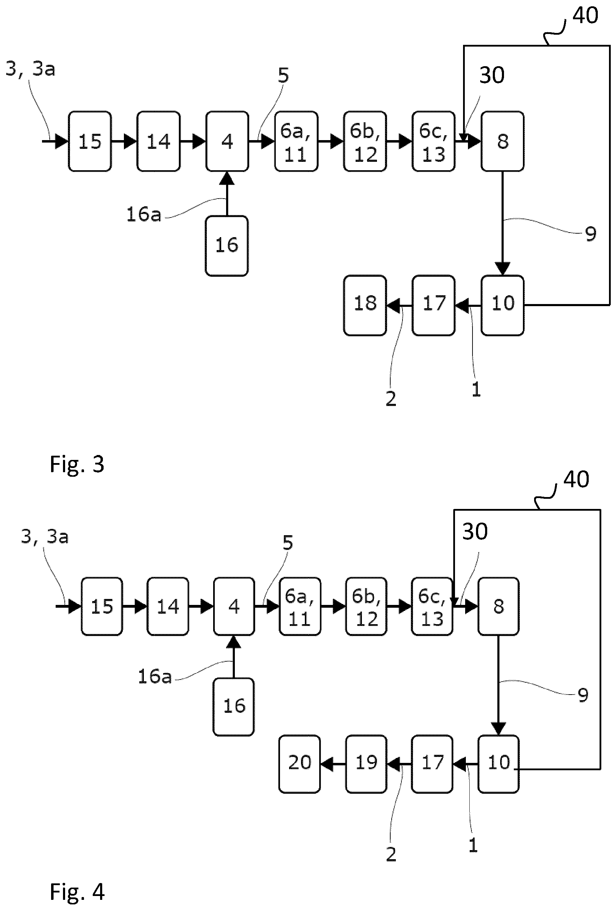

In Fig. 3 ist ein weiteres Ausführungsbeispiel gezeigt. Dies unterscheidet sich von dem zweiten Ausführungsbeispiel in Fig. 2 dadurch, dass gemäß dem vorschlagsgemäßen Verfahren zunächst ein Frisch-Synthesegasstrom 5 aus der Synthesegasreaktoreinrichtung gewonnen wird und dieser dann einer Shiftvorrichtung 6a-c zum Gewinnen eines Niederdruck-Gemisch-Gasstroms 30 zugeführt wird, wobei in der Shiftvorrichtung 6a-c eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet. Bei dem Frisch-Synthesegasstrom 5 muss es sich nicht um das gesamte Synthesegas handeln, welches aus der Synthesegasreaktoranordnung 4 gewonnen wird. Vielmehr kann es sich um einen Teil des aus der Synthesegasreaktoranordnung 4 erhaltenen Synthesegases handeln. Ebenso kann es sein, dass der Frisch-Synthesegasstrom 5 vor Zuführung zu der Shiftvorrichtung 6a-c eine weitere Behandlung erfährt.

Insofern umfasst die Anlage eine Synthesegasreaktoranordnung zusätzlich eine Shiftvorrichtung 6a-c. Die vorschlagsgemäße Anlage umfasst weiter die Shiftvorrichtung 6a-c, welcher zum Gewinnen des Niederdruck-Gemisch-Gasstroms 30 der Frisch-Synthesegasstrom 5 zugeführt wird, wobei in der Shiftvorrichtung 6a-c eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet.

Insbesondere umfasst der Niederdruck-Gemisch-Gasstrom 30 nach Durchlaufen der Shiftvorrichtung 6a-c einen erhöhten Kohlenstoffdioxidanteil als vor der Shiftvorrichtung 6a-6c.

Weiter wird gemäß dem vorschlagsgemäßen Verfahren dann der Niederdruck-Gemisch-Gasstrom 30 der Kompressoranordnung 8 zur Druckerhöhung und zum Gewinnen eines Hochdruck-Gemisch-Gasstromes 9 und des Auswaschstroms 40 zugeführt. Der Auswaschstrom 40 wird dem Niederdruck-Gemisch-Gasstrom 30 prozesstechnisch der Shiftvorrichtung 6a-c nachgelagert zugeführt.

Beim Ausführungsbeispiel der Fig. 4 - welches ansonsten dem Ausführungsbeispiel der Fig. 3 entspricht - ist ein noch höherer Reinheitsgrad des Wasserstoffs am entfernten Ende der Pipeline 2 gewünscht. Deswegen wird beim Ausführungsbeispiel der Fig. 4 dort der wasserstoffhaltige Gasstrom 1 zunächst einer Druckwechsel-Adsorptionsanlage 19 und anschließend einer Anlage 20 zugeführt, in welcher eine chemische Synthese stattfindet, für die ein hoher Reinheitsgrad des Wasserstoffstroms erforderlich ist. Alternativ kann der wasserstoffhaltige Gasstrom 1 auch einem Kraftwerk zugeführt werden, welches besonders hohen Anforderungen an einen niedrigen CO2-Fußabdruck erfüllt.

Beim Ausführungsbeispiel der Fig. 5 hingegen liegt der hohe Reinheitsgrad bereits in der Pipeline 2 vor, weswegen der wasserstoffhaltige Gasstrom 1 aus der Pipeline 2 ohne weitere Behandlung der Anlage 20 zugeführt wird.

Bevorzugt ist weiter, dass bei der autothermen Reformierung in der Synthesegasreaktoranordnung 4 ein molares Dampf-zu-Kohlenstoff-Verhältnis von mindestens 1,5, vorzugsweise von mindestens 1,6, weiter vorzugsweise ein molares Dampf-zu-Kohlenstoff-Verhältnis von mindestens 2 und insbesondere ein molares Dampf-zu-Kohlenstoff-Verhältnis von mindestens 2,4, besteht. Je höher das Dampf-zu-Kohlenstoff-Verhältnis ist, umso geringer ist der Methanslip und umso wirksamer kann Kohlenstoffmonoxid bei einer nachfolgenden Wassergas-Shift-Reaktion in Kohlenstoffdioxid umgewandelt werden. Entsprechend verbleibt durch diese Maßnahmen auch weniger Methan im wasserstoffhaltigen Gasstrom 1 in der Pipeline 2. Auf diese Weise kann also auch ohne Hochdruck-Druckwechsel-Adsorptionsvorrichtung eine hohe Reinheit an Wasserstoff erreicht werden.

Die nachstehende Tabelle gibt verschiedene Prozessparameter wieder, die sich bei unterschiedlichen molaren Dampf-zu-Kohlenstoff-Verhältnissen und einer bei 65 bar betriebenen autothermen Reformierung einstellen.

| | | | | | | |
|---|---|---|---|---|---|---|
| Dampf/C Verhältnis | 1,2 | 1,6 | 2,0 | 2,4 | 2,8 | 3,0 |
| CH₄ Slip % | 3,5% | 2,5% | 1,6% | 1,2% | 0,9% | 0,8% |
| Ausgang ATR trocken | | | | | | |
| CO₂ mol/mol | 0,083 | 0,095 | 0,107 | 0,118 | 0,129 | 0,134 |
| CO mol/mol | 0,230 | 0,218 | 0,206 | 0,195 | 0,183 | 0,179 |
| H₂ mol/mol | 0,651 | 0,661 | 0,668 | 0,673 | 0,677 | 0,680 |

Erkennbar ist, dass sich mit höherem Dampf-zu-Kohlenstoff-Verhältnis der Methanslip verringert. Ebenso erhöht sich der Anteil an Kohlenstoffdioxid und von Wasserstoff gegenüber dem von Kohlenstoffmonoxid im Synthesegas

Grundsätzlich kann es sein, dass der Frisch-Synthesegasstrom 5 nur einer einzelnen Shiftvorrichtung 6a-c zugeführt wird. Gemäß einer weiteren bevorzugten Ausführungsform des vorschlagsgemäßen Verfahrens und der vorschlagsgemäßen Anlage ist zur weiteren Erhöhung der Reinheit des wasserstoffhaltigen Gasstroms 1 vorgesehen, dass der Frisch-Synthesegasstrom 5 einer Vielzahl von, vorzugsweise prozesstechnisch beabstandet angeordneten, Shiftvorrichtungen 6a-c zugeführt wird und dass in den Shiftvorrichtungen 6a-c jeweils eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet. Auf diese Weise kann der Anteil des in Kohlenstoffdioxid umgewandelten Kohlenstoffmonoxids gegenüber der Verwendung nur einer Shiftvorrichtung erhöht werden. Vorzugsweise umfasst die vorschlagsgemäße Anlage die Vielzahl von Shiftvorrichtungen 6a-c.

Eine prozesstechnische beabstandete Anordnung der Shiftvorrichtungen 6a-c bedeutet, dass prozesstechnisch zwischen zwei Shiftvorrichtungen 6a-c mindestens eine weitere Vorrichtung angeordnet ist, bei welcher es sich nicht um eine Shiftvorrichtung 6a-c handelt. Auf diese Weise ist es möglich, den Frisch-Synthesegasstrom 5 von einer Shiftvorrichtung 6a-c zur nächsten auf eine jeweils andere angepasste Temperatur zu bringen.

Grundsätzlich kann es sein, dass in der Vielzahl der Shift Vorrichtungen 6a-c im Wesentlichen identische Prozessparameter und insbesondere Temperaturen vorliegen. Eine bevorzugte Ausführungsform des vorschlagsgemäßen Verfahrens und der vorschlagsgemäßen Anlage ist jedoch dadurch gekennzeichnet, dass in den Shiftvorrichtungen 6a-c die Wassergas-Shift-Reaktion jeweils in einem in Prozessrichtung abnehmenden Temperaturbereich stattfindet. Mit anderen Worten ist die Temperatur in einer prozesstechnisch nachgelagerten Shiftvorrichtung 6a-c niedriger gegenüber einer prozesstechnisch vorgelagerten Shiftvorrichtung 6a-c.

Eine weitere bevorzugte Ausführungsform des vorschlagsgemäßen Verfahrens und der vorschlagsgemäßen Anlage ist dadurch gekennzeichnet, dass die Shiftvorrichtungen 6a-c eine HT-Shiftvorrichtung 11 für eine Hochtemperatur-Wassergas-Shift-Reaktion und eine MT-Shiftvorrichtung 12 für eine Mitteltemperatur-Wassergas-Shift-Reaktion umfassen. Bevorzugt ist weiter, dass die Shiftvorrichtungen 6a-c eine NT-Shiftvorrichtung 13 für eine Niedertemperatur-Wassergas-Shift-Reaktion umfassen. Dabei ist die MT-Shiftvorrichtung 12 prozesstechnisch der HT-Shiftvorrichtung 11 nachgelagert.

Die Hochtemperatur-Wassergas-Shift-Reaktion findet bei einer Temperatur zwischen 300° C und 450° C statt. Die Mitteltemperatur-Wassergas-Shift-Reaktion findet bei einer Temperatur zwischen 220° C und 270° C statt. Die Niedertemperatur-Wassergas-Shift-Reaktion findet bei einer Temperatur zwischen 180° C und 250° C statt. Die Hochtemperatur-Wassergas-Shift-Reaktion hat für die Umwandlung in CO2 zwar ein schlechteres Reaktionsgleichgewicht, aber eine bessere Reaktionsgeschwindigkeit. Das hohe molares Dampf-zu-Kohlenstoff-Verhältnis verbessert das Reaktionsgleichgewicht. Durch diese Kaskadierung der Shiftvorrichtungen 6a-c kann zunächst ein rascher Abbau von Kohlenstoffmonoxid erreicht werden, wobei die nachfolgenden Stufen sukzessive die verbliebenen Reste an Kohlenstoffmonoxid umwandeln. Da die Konzentration des Kohlenstoffmonoxids bereits verringert wurde, kann auch eine längere Reaktionszeit in Kauf genommen werden.

Gemäß einer weiteren bevorzugten Ausführungsform des vorschlagsgemäßen Verfahrens und der vorschlagsgemäßen Anlage gemäß den Ausführungsbeispielen der Fig. 3 bis 5 ist es vorgesehen, dass der Energieträgerstrom 3 vor Zuführung zur Synthesegasreaktoranordnung 4 einer Sättigungsstufe 14 zugeführt wird, in welcher Sättigungsstufe 14 dem Energieträgerstrom 3 vorgewärmtes Kondensat zugeführt wird. Auf diese Weise kann die für das Erzeugen des Synthesegases geeignete Stöchiometrie erreicht werden. Vorzugsweise umfasst die vorschlagsgemäße Anlage die Sättigungsstufe 14.

Eine bevorzugte Ausführungsform des vorschlagsgemäßen Verfahrens und der vorschlagsgemäßen Anlage ist dadurch gekennzeichnet, dass die Synthesegasreaktoranordnung 4 einen Pre-Reformer zum Aufspalten von Kohlenwasserstoffen mit mindestens zwei Kohlenstoffatomen in Methan aufweist. Weiter ist bevorzugt, dass der Energieträgerstrom 3 vor Zuführung zur Sättigungsstufe 14 einer Entschwefelungsstufe 15 zur Entschwefelung des Energieträgerstroms 3 zugeführt wird. Vorzugsweise umfasst die vorschlagsgemäße Anlage die Entschwefelungsstufe 15.

Vorzugsweise erfolgt in dem Pre-Reformer eine adiabatische Dampfreformierung über einem nickelbasierten Katalysator. Es ist bevorzugt, dass das Gewinnen des Frisch-Synthesegasstroms 5 aus der autothermen Reformierung und dem Pre-Reforming in dem Pre-Reformer besteht. Dementsprechend findet dann keine herkömmliche Dampfreformierung bei dem Gewinnen des Frisch-Synthesegasstroms 5 statt.

Eine weitere bevorzugte Ausführungsform des vorschlagsgemäßen Verfahrens und der vorschlagsgemäßen Anlage ist dadurch gekennzeichnet, dass ein Sauerstoffstrom 16a aus einer Sauerstoffgewinnungsanordnung 16 der Synthesegasreaktoranordnung 4 zum Gewinnen des Frisch-Synthesegasstroms 5 zugeführt wird. Vorzugsweise umfasst die vorschlagsgemäße Anlage die Sauerstoffgewinnungsanordnung 16. Hier ist weiter bevorzugt, dass die Synthesegasreaktoranordnung 4 aus dem Energieträgerstrom 3 den Frisch-Synthesegasstrom 5 durch eine autotherme Reformierung mit dem Sauerstoffstrom 16a gewinnt. Durch die Verwendung von Sauerstoff anstelle von Umgebungsluft kann der Anteil an Stickstoff im Frisch-Synthesegasstrom 5 wesentlich verringert werden. Das erleichtert es, einen hohen Anteil an Wasserstoff im wasserstoffhaltigen Gasstrom 1 zu erreichen.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zum Speisen eines wasserstoffhaltigen Hochdruck-Gasstroms (1) in eine Pipeline (2), wobei ein Niederdruck-Gemisch-Gasstrom (30) enthaltend mindestens 50% Wasserstoff und Kohlenstoffdioxid einer Kompressoranordnung (8) zur Druckerhöhung und zum Gewinnen eines Hochdruck-Gemisch-Gasstroms (9) zugeführt wird und wobei der Hochdruck-Gemisch-Gasstrom (9) einer Kohlenstoffdioxidwäsche (10) zum Auswaschen mindestens eines Teiles des Kohlenstoffdioxids als Auswaschstrom (40) aus dem Hochdruck-Gemisch-Gasstrom (9) und zum Erhalten des wasserstoffhaltigen Hochruck-Gasstroms (1) zugeführt wird, wobei zumindest ein Teil des Auswaschstroms (40) prozesstechnisch der Kompressoranordnung (8) vorgelagert dem Niederdruck-Gemisch-Gasstrom (30) zugeführt wird und wobei der wasserstoffhaltige Hochdruck-Gasstrom (1) in die Pipeline (2) gespeist wird.

2. Verfahren nach Anspruch 1,
**dadurch gekennzeichnet, dass**
der Niederdruck-Gemisch-Gasstrom (30) zumindest teilweise aus einem Niederdruck-Wasserstoffstrom (70) gewonnen durch Elektrolyse (80) gewonnen wird.

3. Verfahren nach Anspruch 1 bis 2,
**dadurch gekennzeichnet, dass**
der Niederdruck-Gemisch-Gasstrom (30) zumindest teilweise aus einem Niederdruck-Kohlenstoffdioxidstrom (90) gewonnen wird.

4. Verfahren nach Anspruch 1 bis 3,
**dadurch gekennzeichnet, dass**
der Niederdruck-Gemisch-Gasstrom (30) zumindest teilweise aus einer Synthesegasreaktoranordnung (4) gewonnen wird.

5. Verfahren nach Anspruch 1 bis 5,
**dadurch gekennzeichnet, dass**
der Niederdruck-Gemisch-Gasstrom (30) und/oder der Hochdruck-Gemisch-Gasstrom (9) einen Kohlenstoffdioxidanteil im Bereich von 20 Vol% bis 40 Vol% aufweist.

6. Verfahren nach Anspruch 1,
**dadurch gekennzeichnet, dass**
der wasserstoffhaltige Gasstrom (1) nach Erhalten aus der Kohlenstoffdioxidwäsche (10) druckerhöhungsfrei in die Pipeline (2) gespeist wird.

7. Verfahren nach Anspruch 1 bis 6,
**dadurch gekennzeichnet, dass** die Kompressoranordnung (8) den Druck so erhöht, dass der Hochdruck-Synthesegasstrom (9) einen Druck von mindestens 80 bar, vorzugsweise von mindestens 100 bar und insbesondere von mindestens 120 bar aufweist.

8. Verfahren nach einem der Ansprüche 1 bis 7,
**dadurch gekennzeichnet, dass**
die Kompressoranordnung (8) einen Turbokompressor aufweist.

9. Verfahren nach einem der Ansprüche 1 bis 8,
**dadurch gekennzeichnet, dass**
der wasserstoffhaltige Gasstrom (1) einen molaren Anteil an Kohlenstoffdioxid von weniger als 1 % und insbesondere von weniger als 1 Promille aufweist.

10. Verfahren nach einem der Ansprüche 1 bis 9,
**dadurch gekennzeichnet, dass**
der wasserstoffhaltige Gasstrom (1) einen molaren Anteil an Wasserstoff von mindestens 98 % und vorzugsweise von mindestens 99 % aufweist.

11. Verfahren nach einem der Ansprüche 1 bis 10,
**dadurch gekennzeichnet, dass**
der wasserstoffhaltige Gasstrom (1) im Wesentlichen mit der Zusammensetzung in die Pipeline (2) gespeist wird, mit welcher er aus der Kohlenstoffdioxidwäsche (10) erhalten wurde.

12. Verfahren nach einem der Ansprüche 1 bis 11,
**dadurch gekennzeichnet, dass**
der wasserstoffhaltige Gasstrom (1) prozesstechnisch zwischen der Kohlenstoffdioxidwäsche (10) und dem Speisen in die Pipeline (2) einer Hochdruck-Druckwechsel-Adsorptionsvorrichtung (21) zur Erhöhung eines Reinheitsgrads an Wasserstoff zugeführt wird.

13. Verfahren nach einem der Ansprüche 1 bis 11,
**dadurch gekennzeichnet, dass**
in der Kohlenstoffdioxidwäsche (10) das Kohlenstoffdioxid durch ein Methanol umfassendes Waschmedium ausgewaschen wird.

14. Verfahren nach einem der Ansprüche 1 bis 13,
**dadurch gekennzeichnet, dass** der wasserstoffhaltige Hochdruck-Gasstrom (1) einer Ammoniak-Synthese-Anlage (18) zugeführt wird.

15. Anlage zum Speisen eines wasserstoffhaltigen Gasstroms (1) in eine Pipeline (2), welche Anlage
- eine Kompressoranordnung (8) zur Druckerhöhung aufweist, welcher zum Gewinnen eines Hochdruck-Gemisch-Gasstroms (9) ein Niederdruck-Gemisch-Gasstrom (30) enthaltend Wasserstoff und Kohlenstoffdioxid zugeführt wird,
- eine Kohlenstoffdioxidwäsche (10) aufweist, welcher zum Erhalten des wasserstoffhaltigen Gasstroms (1) der Hochdruck-Gemisch-Gasstrom (9) zugeführt wird, wobei in der Kohlenstoffdioxidwäsche (10) mindestens ein Teil des Kohlenstoffdioxids als Auswaschstrom (40) aus dem Hochdruck-Synthesegasstrom (9) ausgewaschen wird, wobei zumindest ein Teil des Auswaschstroms (40) prozesstechnisch der Kompressoranordnung (8) vorgelagert dem Niederdruck-Gemisch-Gasstrom (30) zugeführt wird,
- und einen Pipelineanschluss (17) aufweist, welcher der wasserstoffhaltige Strom (1) zum Speisen in die Pipeline (2) zugeführt wird.
